# EUROPÄISCHE PATENTANMELDUNG

(11) **EP 3 196 688 A1**
(43) Veröffentlichungstag der Anmeldung: **26.07.2017**
(21) Anmeldenummer: 16152424.4
(22) Anmeldetag: 22.01.2016
(51) Int. Cl.: G02B 27/12, G06K 7/10

(54) **OPTISCHE OBJEKTERFASSUNGSVORRICHTUNG, OPTISCHER SENSOR UND AUFSATZ FÜR EINEN OPTISCHEN SENSOR**

(71) Anmelder: Siemens Aktiengesellschaft, 80333 München (DE)
(72) Erfinder: Müller, Peter-Michael, 75045 Walzbachtal-Wössingen (DE)

(57) **Zusammenfassung**

Die Erfindung betrifft eine optische Objekterfassungsvorrichtung mit einer Mehrzahl in einer Reihe nebenander angeordneter und gleichartig ausgerichteter optischer Sensoren (101,102,103), deren Erfassungsbereiche (112,122,132) sich mit Erfassungsbereichen jeweils benachbarter optischer Sensoren überlappen. Vor jedem optischen Sensor ist jeweils ein Prismensystem angeordnet, das ein erstes und ein zweites optisches Prisma (123a, 123b) umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen. Außerdem weisen das erste und das zweite optische Prisma betragsgleiche, entgegengesetzte Ablenkungswinkel in Relation zu einer optischen Achse des jeweiligen optischen Sensors auf.

## Beschreibung

Optische Objekterfassungsvorrichtungen sind beispielsweise dafür vorgesehen, bewegte Objekte auf Fördereinrichtungen, wie Förderbändern, zu identifizieren und während eines Produktionsablaufs zu verfolgen. Hierbei können die Objekte mit einem maschinenlesbaren Code markiert sein, der bei Passieren einer Kontrollstelle durch eine optische Objekterfassungsvorrichtung zu erfassen ist. Üblicherweise umfassen optische Objekterfassungsvorrichtungen zweidimensionale lichtempfindliche Sensoren mit Linsensystemen, die reale Gegenstände in eine Bildebene projizieren. Um Fördereinrichtungen in ihrer gesamten Breite lückenlos auf zu erfassende Objekte überwachen zu können, umfassen optische Objekterfassungsvorrichtungen typischerweise eine Mehrzahl in einer Reihe nebenander angeordneter optischer Sensoren, deren Erfassungsbereiche sich mit Erfassungsbereichen jeweils benachbarter optischer Sensoren überlappen. Auf diese Weise können Codemarkierungen auf zu erfassenden Objekten durch zumindest einen der optischen Sensoren erfasst werden.

Maßnahmen zur Reduktion von Kosten für optische Objekterfassungsvorrichtungen zielen vorrangig darauf ab, möglichst wenige optische Sensoren zu verwenden. Hierzu sind beispielsweise Field of View Expander entwickelt worden, die auf optischem Weg den Erfassungsbereich von optischen Sensoren ohne Auflösungsverminderung verbreitern.

Aus US 8646690 B2 ist ein System zur Ausdehnung eines Sichtbereichs einer Kamera bekannt, bei dem ein erster äußerer Spiegel in einem spitzen Winkel zu einer optischen Achse der Kamera angeordnet ist, während ein zweiter äußerer Spiegel in einem entgegengesetzten spitzen Winkel an einer hinsichtlich der optischen Achse gegenüberliegenden Seite angeordnet ist. Zusätzlich zu den beiden äußeren Spiegeln, die außerhalb des Sichtbereichs der Kamera angeordnet sind, ist eine zentrale Spiegelanordnung vor den beiden äußeren Spiegel und der Kamera innerhalb der Sichtbereichs der Kamera vorgesehen. Diese Spiegelanordnung umfasst ein erstes und ein zweites Spiegel-element, die innerhalb des Sichtbereichs der Kamera in einem entgegengesetzten Winkel zur optischen Achse der Kamera angeordnet sind. Dabei ist das erste Spiegelelement einer ersten Hälfte des Sichtbereichs der Kamera zugeordnet und auf den ersten äußeren Spiegel ausgerichtet, während das zweite Spiegelelement einer zweiten Hälfte des Sichtbereichs der Kamera zugeordnet und auf den zweiten äußeren Spiegel ausgerichtet ist. Auf diese Weise wird die erste Hälfte des Sichtbereichs der Kamera durch den ersten äußeren Spiegel und das erste Spiegelelement erweitert, während die zweite Hälfte des Sichtbereichs durch den zweiten äußeren Spiegel und das zweite Spiegelelement erweitert wird. Dabei liegen die beiden erweiterten Hälften des Sichtbereichs der Kamera streifenartig nebeneinander. Nachteilig ist, dass eine Ausrichtung bzw. Justierung der beiden äußeren Spiegel und der beiden Spiegelelemente der zentralen Spiegelanordnung äußerst aufwendig ist.

In EP 2 924 476 A1 ist eine optoelektronische Vorrichtung in stationärer Montage an einem Überwachungsbereich mit zu erfassenden Objekten beschrieben, die einen Bildsensor zum Erzeugen von Aufnahmen der Objekte und eine dem Bildsensor zugeordnete Empfangsoptik mit einer adaptiven Linse umfasst. Die adaptive Linse weist eine variable Verkippung auf. Darüber hinaus ist eine Auswertungseinheit zum Bestimmen von Objektinformationen aus einer Aufnahme vorgesehen. Dabei ist die Auswertungseinheit dafür ausgebildet, aus einem externen Eingangssignal das Bewegungsverhalten eines aufzunehmenden Objekts abzuleiten und die adaptive Linse während einer Aufnahme des Objekts so zu verkippen, dass die Bewegung des Objekts kompensiert ist.

DE 102009021231 A1 betrifft eine Leseeinrichtung für flächenhafte Codierungen, welche beispielsweise auf Oberflächen von Post- und Frachtstücken, Verpackungen aufgedruckt oder indirekt angebracht sind. Die Leseeinrichtung weist eine Optik zur Erfassung eines Codeaufdrucks auf einer Oberfläche und eine Verarbeitungseinheit auf. Die Verarbeitungseinheit umfasst Auswertemittel zur Dekodierung eines erfassten Codeaufdrucks und Korrekturmittel zur Bildung eines entzerrten Codeaufdrucks, bei dem insbesondere von der Optik der Leseeinrichtung hervorgerufene Verzerrungen des erfassten Codeaufdrucks korrigiert sind. Außerdem weist die Verarbeitungseinheit Verifikationsmittel auf, die den entzerrten Codeaufdruck auswerten und diesem einen Wert aus einer Markierungsqualitätsskala zuordnen, wobei die Werte der Markierungsqualitätsskala die Güte der Auswertbarkeit des Codeaufdrucks durch die Auswertemittel anzeigen. Darüber hinaus umfasst die Verarbeitungseinheit Meldemittel zur Generierung einer Meldung, wenn der Wert der Markierungsqualitätsskala eine abnehmende bzw. zu geringe Güte der Auswertbarkeit des Codeaufdrucks angenommen hat. Hiermit können Justagearbeiten an der Optik der Leseeinrichtung und eine verfrühte Auslösung von Wartungsarbeiten z.B. an Markungsdruckern vermieden werden.

In WO 2010/105686 A1 ist eine optische Erfassungseinheit mit einer Kamera zur Erzeugung einer datentechnisch auswertbaren Abbildung zumindest eines Bereiches auf der Oberfläche eines zu erfassenden Objektes beschrieben. Des weiteren ist eine Beleuchtungseinheit vorgesehen, welche annähernd ringförmig um den optisch aktiven Bereich der digitalen Kamera angeordnet ist. Eine zusätzliche Auswerteeinheit identifiziert und decodiert in der Abbildung datentechnisch auswertbare Bereiche. Die Auswerteeinheit weist Kompensationsmittel auf, welche den Helligkeitsgradienten der Abbildung mit Bezug auf ein Zentrum mit geringster bzw. größter Helligkeit datentechnisch erfassen. Außerdem homogenisieren die Kompensationsmittel ausgehend vom Zentrum und abhängig von der Helligkeitszunahme bzw. Helligkeitsabnahme in radialer Richtung den Helligkeitsgradienten in der Abbildung.

Der vorliegenden Erfindung liegt die Aufgabe zugrunde, eine robuste und einfach zu realisierende optische Objekterfassungsvorrichtung mit einem erweiterten Erfassungsbereich zu schaffen sowie eine geeignete Nachrüstlösung für bestehende Objekterfassungsvorrichtungen anzugeben.

Diese Aufgabe wird erfindungsgemäß durch ein optisches Objekterfassungssystem mit den in Anspruch 1 genannten Merkmalen, durch einen optischen Sensor mit den in Anspruch 10 genannten Merkmalen und durch einen Aufsatz für einen optischen Sensor einer optischen Objekterfassungsvorrichtung mit den in Anspruch 11 genannten Merkmalen gelöst. Vorteilhafte Weiterbildungen der vorliegenden Erfindung sind in den abhängigen Ansprüchen angegeben.

Die erfindungsgemäße optische Objekterfassungsvorrichtung umfasst eine Mehrzahl in einer Reihe nebenander angeordneter und gleichartig ausgerichteter optischer Sensoren, deren Erfassungsbereiche sich mit Erfassungsbereichen jeweils benachbarter optischer Sensoren überlappen. Dabei sind die optischen Sensoren jeweils dazu ausgestaltet und eingerichtet sind, aus Gegenstandspunkten Bildpunkte zu erzeugen. Erfindungsgemäß ist jeweils ein vor jedem optischen Sensor angeordnetes Prismensystem vorgesehen, das ein erstes und ein zweites optisches Prisma umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen. Dabei erstrecken sich das erste und das zweite optische Prisma mit ihren Grundflächen parallel zur Reihe der optischen Sensoren. Außerdem grenzen das erste und das zweite optische Prisma mit ihren Austrittsflächen an den jeweiligen optischen Sensor an. Darüber hinaus weisen das erste und das zweite optische Prisma betragsgleiche, entgegengesetzte Ablenkungswinkel in Relation zu einer optischen Achse des jeweiligen optischen Sensors auf.

Die erfindungsgemäße optische Objekterfassungsvorrichtung ist gegenüber bestehenden Lösungen zur Erfassungsbereichsverbreiterung sehr montagefreundlich und daher einfach sowie kostengünstig zu realisieren. Die Prismensysteme der erfindungsgemäßen optischen Objekterfassungsvorrichtung sind vorteilhafterweise in bestehenden Anlagen nachrüstbar. Darüber hinaus ist die erfindungsgemäße optische Objekterfassungsvorrichtung insbesondere für Förderband-Anwendungen interessant, bei denen zu erfassende Objekte hinreichend viele charakteristische Merkmale aufweisen und eine durch einen Prismen-Split bedingte Aufteilung des Erfassungsbereichs in zwei sich quer zu einer Transportrichtung unterschiedlich erstreckender Teilbereiche unkritisch ist.

Vorzugsweise sind das erste und das zweite optische Prisma hinsichtlich ihrer Hochachsen aneinander angrenzend angeordnet. Dabei sind die Hochachsen senkrecht zu den Grundflächen des ersten und des zweiten optischen Prismas. Entsprechend einer weiteren Ausgestaltung der vorliegenden Erfindung sind die optischen Sensoren an einem gemeinsamen Trägerelement montiert und entlang des Trägerelements zueinander beabstandet angeordnet. Darüber hinaus können die optischen Sensoren dazu ausgestaltet und eingerichtet sein, quer zu einer Längsachse des Trägerelements bewegte Objekte zu erfassen.

Entsprechend einer bevorzugten Ausgestaltung der erfindungsgemäßen optischen Objekterfassungsvorrichtung sind die optische Sensoren dazu ausgestaltet und eingerichtet, zweidimensionale Codes auf zu identifizierenden Objekten bzw. Objektmerkmale von zu identifizierenden Objekten innerhalb des Erfassungsbereichs des jeweiligen optischen Sensors zu erfassen. Dabei umfassen die optischen Sensoren beispielsweise jeweils zumindest ein Linsensystem. Insbesondere können die optischen Sensoren Digitalkameras sein.

Vorteilhafterweise sind das erste und das zweite optische Prisma in einem gemeinsamen Gehäuse angeordnet, das als Aufsatz an einen optischen Sensor montierbar ist. Dies ermöglicht eine besonders einfache Montage eines korrekt justierten Prismensystems. Dabei können das erste und das zweite optische Prisma jeweils als Keil-Prisma ausgestaltet sind.

Der erfindungsgemäße optische Sensor ist für eine optische Objekterfassungsvorrichtung entsprechend vorangehenden Ausführungen vorgesehen und dazu ausgestaltet und eingerichtet, aus Gegenstandspunkten Bildpunkte zu erzeugen. Vor einem Linsensystem des optischen Sensors ist ein Prismensystem angeordnet, das ein erstes und ein zweites optisches Prisma umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen. Das erste und das zweite optische Prisma erstrecken sich mit ihren Grundflächen parallel zur Reihe der optischen Sensoren und grenzen mit ihren Austrittsflächen an das Linsensystem an. Darüber hinaus weisen das erste und das zweite optische Prisma betragsgleiche, entgegengesetzte Ablenkungswinkel in Relation zu einer optischen Achse des jeweiligen optischen Sensors auf.

Der erfindungsgemäße Aufsatz ist für einen optischen Sensor einer optischen Objekterfassungsvorrichtung entsprechend vorangehenden Ausführungen vorgesehen und weist ein vor einem optischen Sensor anordenbares Prismensystem auf, das ein erstes und ein zweites optisches Prisma umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen. Dabei sind das erste und das zweite optische Prisma mit ihren Austrittsflächen an den optischen Sensor angrenzend anordenbar. Darüber hinaus weisen das erste und das zweite optische Prisma betragsgleiche, entgegengesetzte Ablenkungswinkel in Relation zu einer optischen Achse des jeweiligen optischen Sensors auf.

Die vorliegende Erfindung wird nachfolgend an einem Ausführungsbeispiel anhand der Zeichnung näher erläutert. Es zeigt
- Figur 1: eine schematische Darstellung einer Optische Objekterfassungsvorrichtung mit einer Mehrzahl optischer Sensoren,
- Figur 2: eine schematische Darstellung eines in Figur 1 dargestellten optischen Sensors mit einem Aufsatz zur Erfassungsbereichserweiterung,
- Figur 3: eine schematische Darstellung des erweiterten Erfassungsbereichs des in Figur 2 dargestellten optischen Sensors aus Sensorperspektive,
- Figur 4: eine schematische Darstellung des erweiterten Erfassungsbereichs des in Figur 2 dargestellten optischen Sensors aus Sensorperspektive in einer veränderten Konfiguration.

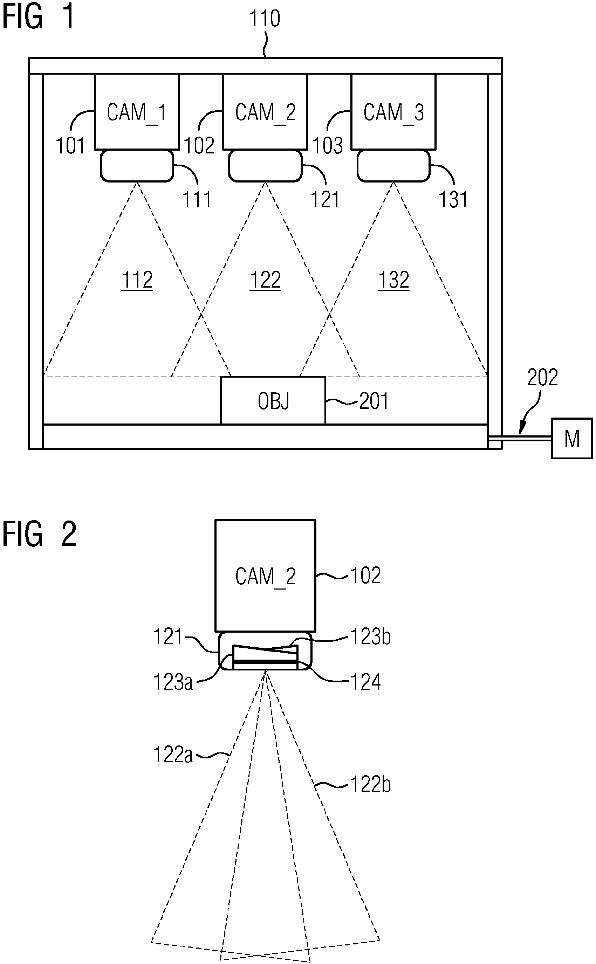

Die in Figur 1 dargestellte optische Objekterfassungsvorrichtung umfasst eine Mehrzahl in einer Reihe nebenander angeordneter und gleichartig ausgerichteter optischer Sensoren 101-103, deren Erfassungsbereiche 112, 122, 132 sich mit Erfassungsbereichen jeweils benachbarter optischer Sensoren überlappen. Die optischen Sensoren 101-103 sind jeweils dazu ausgestaltet und eingerichtet, aus Gegenstandspunkten Bildpunkte zu erzeugen und insbesondere zweidimensionale Codes auf zu identifizierenden Objekten 201 bzw. Objektmerkmale von zu identifizierenden Objekten 201 innerhalb des Erfassungsbereichs 112, 122, 132 des jeweiligen optischen Sensors 101-103 zu erfassen.

Im vorliegenden Ausführungsbeispiel sind die optischen Sensoren 101-103 Digitalkameras und umfassen jeweils zumindest ein Linsensystem 111, 121, 131. Darüber hinaus sind die optischen Sensoren 101-103 an einem gemeinsamen Trägerelement 110 montiert und entlang des Trägerelements zueinander beabstandet angeordnet. Insbesondere sind die optischen Sensoren 101-103 dazu ausgestaltet und eingerichtet, quer zu einer Längsachse des Trägerelements 110 beispielsweise mittels eines Förderbands 202 bewegte Objekte 201 zu erfassen.

Zur Erfassungsbereichserweiterung umfasst jeder optischen Sensor 101-103 jeweils ein vor seinem Linsensystem 111, 121, 131 angeordnetes Prismensystem. Exemplarisch für den optischen Sensor 102 ist in Figur 2 dargestellt, dass das Prismensystem ein erstes 123a und ein zweites optisches Prisma 123b umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen. Das erste 123a und das zweite optische Prisma 123b sind vorzugsweise jeweils als Keil-Prisma ausgestaltet und in einem gemeinsamen Gehäuse angeordnet bzw. von einem Ring 124 gefasst. Auf diese Weise können das erste 123a und das zweite optische Prisma 123b in einem Aufsatz an einen bestehenden optischen Sensor montierbar werden. Alternativ zu Keilprismen können beispielsweise auch optische Prismen mit konkav-konvexer Bauform verwendet werden.

Das erste 123a und das zweite optische Prisma 123b erstrecken sich mit ihren Grundflächen parallel zur Reihe der optischen Sensoren 101-103 und grenzen mit ihren Austrittsflächen an den optischen Sensor 102 an. Außerdem sind das erste 123a und das zweite optische Prisma 123b hinsichtlich ihrer Hochachsen aneinander angrenzend angeordnet, wobei die Hochachsen senkrecht zu den Grundflächen des ersten 123a und des zweiten optischen 123b Prismas sind. Darüber hinaus weisen das erste und das zweite optische Prisma betragsgleiche, aber entgegengesetzte Ablenkungswinkel in Relation zu einer optischen Achse des optischen Sensors 102. Auf diese Weise wird der Erfassungsbereich 122 des optischen Sensors 102 in parallele Teilbereiche 122a, 122b unterteilt, die den Erfassungsbereich 122 des optischen Sensors 102 wie in Figur 2 dargestellt senkrecht zu den Hochachsen der beiden optischen Prismen 123a, 123b bzw. horizontal erweitern.

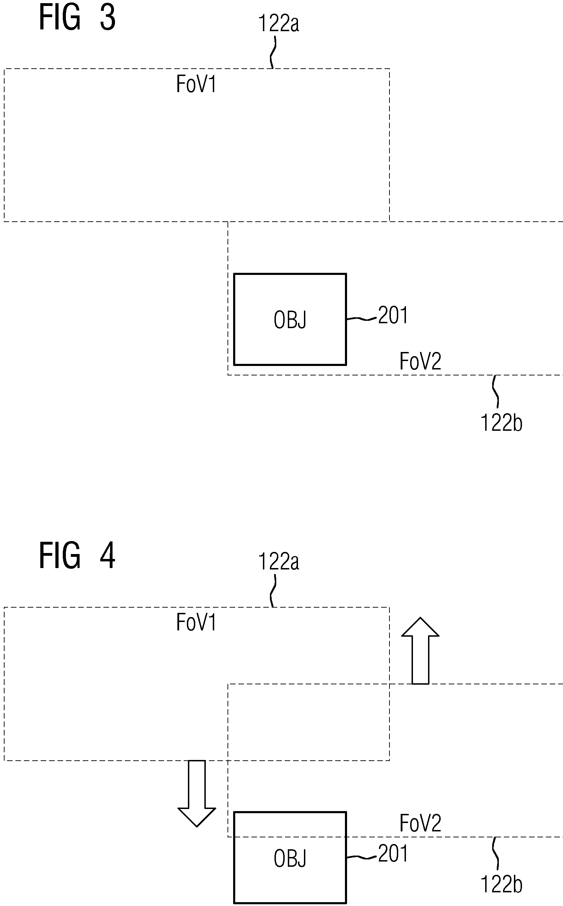

Entsprechend der in Figur 3 dargestellten Sensorperspektive des Erfassungsbereichs 122 ergeben sich mit den beiden optischen Prismen 123a, 123b parallel zu den Hochachsen der beiden optischen Prismen 123a, 123b bzw. vertikal gestapelte Teilbereiche 122a, 122b, die streifenartig nebeneinander liegen und zueinander horizontal verschoben sind. Somit ist der Erfassungsbereich 122 des optischen Sensors 102 horizontal in zwei Teilbereiche 122a, 122b mit halbierter Höhe unterteilt. Werden die beiden Prismen 123a, 123b um ihre Hochachsen bzw. in Relation zu einer optischen Achse des optischen Sensors 102 gedreht, können die Teilbereiche 122a, 122b wie in Figur 4 dargestellt vertikal verschoben werden. Auf diese Weise lässt sich ein lückenloser Erfassungsbereich realisieren.

## Patentansprüche

1. Optische Objekterfassungsvorrichtung mit
- einer Mehrzahl in einer Reihe nebenander angeordneter und gleichartig ausgerichteter optischer Sensoren, deren Erfassungsbereiche sich mit Erfassungsbereichen jeweils benachbarter optischer Sensoren überlappen, wobei die optischen Sensoren jeweils dazu ausgestaltet und eingerichtet sind, aus Gegenstandspunkten Bildpunkte zu erzeugen,
- jeweils einem vor jedem optischen Sensor angeordneten Prismensystem, das ein erstes und ein zweites optisches Prisma umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen,
- wobei sich das erste und das zweite optische Prisma mit ihren Grundflächen parallel zur Reihe der optischen Sensoren erstrecken, und wobei das erste und das zweite optische Prisma mit ihren Austrittsflächen an den jeweiligen optischen Sensor angrenzen, und wobei das erste und das zweite optische Prisma betragsgleiche, entgegengesetzte Ablenkungswinkel in Relation zu einer optischen Achse des jeweiligen optischen Sensors aufweisen.

2. Vorrichtung nach Anspruch 1,
bei der das erste und das zweite optische Prisma hinsichtlich ihrer Hochachsen aneinander angrenzend angeordnet sind, und wobei die Hochachsen senkrecht zu den Grundflächen des ersten und des zweiten optischen Prismas sind.

3. Vorrichtung nach einem der Ansprüche 1 oder 2,
bei dem die optischen Sensoren an einem gemeinsamen Trägerelement montiert und entlang des Trägerelements zueinander beabstandet angeordnet sind.

4. Vorrichtung nach Anspruch 3,
bei dem die optischen Sensoren dazu ausgestaltet und eingerichtet sind, quer zu einer Längsachse des Trägerelements bewegte Objekte zu erfassen.

5. Vorrichtung nach einem der Ansprüche 1 bis 4,
bei dem die optische Sensoren dazu ausgestaltet und eingerichtet sind, zweidimensionale Codes auf zu identifizierenden Objekten und/oder Objektmerkmale von zu identifizierenden Objekten innerhalb des Erfassungsbereichs des jeweiligen optischen Sensors zu erfassen.

6. Vorrichtung nach Anspruch 5,
bei dem die optischen Sensoren jeweils zumindest ein Linsensystem umfassen.

7. Vorrichtung nach einem der Ansprüche 5 oder 6,
bei dem die optischen Sensoren Digitalkameras sind.

8. Vorrichtung nach einem der Ansprüche 1 bis 7,
bei dem das erste und das zweite optische Prisma in einem gemeinsamen Gehäuse angeordnet sind, das als Aufsatz an einen optischen Sensor montierbar ist.

9. Vorrichtung nach einem der Ansprüche 1 bis 8,
bei dem das erste und das zweite optische Prisma jeweils als Keil-Prisma ausgestaltet sind.

10. Optischer Sensor für eine optischen Objekterfassungsvorrichtung nach einem der Ansprüche 1 bis 9, bei dem
- der optische Sensor dazu ausgestaltet und eingerichtet ist, aus Gegenstandspunkten Bildpunkte zu erzeugen,
- einem vor einem Linsensystem des optischen Sensors angeordneten Prismensystem, das ein erstes und ein zweites optisches Prisma umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen,
- wobei sich das erste und das zweite optische Prisma mit ihren Grundflächen parallel zur Reihe der optischen Sensoren erstrecken, und wobei das erste und das zweite optische Prisma mit ihren Austrittsflächen an das Linsensystem angrenzen, und wobei das erste und das zweite optische Prisma betragsgleiche, entgegengesetzte Ablenkungswinkel in Relation zu einer optischen Achse des jeweiligen optischen Sensors aufweisen.

11. Aufsatz für einen optischen Sensor einer optischen Objekterfassungsvorrichtung nach einem der Ansprüche 1 bis 9, bei dem
- ein vor einem optischen Sensor anordenbares Prismensystem ein erstes und ein zweites optisches Prisma umfasst, die jeweils eine objektseitige Eintrittsfläche und eine sensorseitige Austrittsfläche sowie einen vorgegebenen Ablenkungswinkel zwischen Eintrittsfläche und Austrittsfläche aufweisen,
- wobei das erste und das zweite optische Prisma mit ihren Austrittsflächen an den optischen Sensor angrenzend anordenbar sind, und wobei das erste und das zweite optische Prisma betragsgleiche, entgegengesetzte Ablenkungswinkel in Relation zu einer optischen Achse des jeweiligen optischen Sensors aufweisen.
